Europäisches Patentamt

European Patent Office

Office européen des brevets

(19)

(11) Veröffentlichungsnummer: **0 267 484 B1**

(12) # EUROPÄISCHE PATENTSCHRIFT

(45) Veröffentlichungstag der Patentschrift: **21.04.93**

(51) Int. Cl.5: **H04B 10/00**

(21) Anmeldenummer: **87115711.1**

(22) Anmeldetag: **27.10.87**

(54) **Verfahren und Einrichtung zur automatischen Dämpfungs-Kompensation einer faseroptischen Messwertübertragung.**

(30) Priorität: **10.11.86 DE 3638316**

(43) Veröffentlichungstag der Anmeldung:
**18.05.88 Patentblatt 88/20**

(45) Bekanntmachung des Hinweises auf die
Patenterteilung:
**21.04.93 Patentblatt 93/16**

(84) Benannte Vertragsstaaten:
**CH DE FR GB LI**

(56) Entgegenhaltungen:
**EP-A- 0 009 220**
**DE-B- 1 000 869**

**PATENT ABSTRACTS OF JAPAN, Band 7, Nr.
40 (E-159)[1185], 17. Februar 1983 & JP-A-57
190 436**

(73) Patentinhaber: **BBC Brown Boveri Aktiengesellschaft**

**CH-5401 Baden(CH)**

(72) Erfinder: **Ammann, Urs**
**Rankstrasse 19**
**CH-5430 Wettingen(CH)**
Erfinder: **Dobler, Thomas**
**Juchstrasse 10**
**CH-8116 Würenlos(CH)**
Erfinder: **Maschek, Martin**
**Florastrasse 33**
**CH-8116 Würenlos(CH)**
Erfinder: **Mastner, Georg, Dr.**
**Loonstrasse 5**
**CH-5443 Niederrohrdorf(CH)**

**Beschreibung**

TECHNISCHES GEBIET

Bei der Erfindung wird ausgegangen von einem Verfahren zur automatischen Dämpfungskompensation einer faseroptischen Messwertübertragung nach dem Oberbegriff des Patentanspruchs 1 und von einer automatischen Dämpfungskomensationseinrichtung nach dem Oberbegriff des Patentanspruchs 5.

STAND DER TECHNIK

Mit dem Oberbegriff der Patentansprüche 1 und 5 nimmt die Erfindung auf einen Stand der Technik von Verfahren und Einrichtungen zur automatischen Dämpfungskompensation einer faseroptischen Messwertübertragung Bezug, wie er aus der Firmendruckschrift: NOT/912-05/86, Mai 1986, MELOPEE, MULTICHANNEL EMP/LIGHTING - DATA ACQUISITION AND MEASUREMENT SYSTEM, THOMSON-CSF, 31, rue Camille Desmoulins/BP 12 - 92132 Issy les Moulineaux/France, S. 25-28, bekannt ist. Dort werden elektrische Messwerte mit einem sehr breiten Frequenzspektrum im Bereich von 100 Hz - 150 MHz von einem optischen Sender mit Sendeverstärker und nachgeschalteter, lichtemittierender Sendediode über ein faseroptisches Kabel zu einem optischen Empfänger mit Fotodiode und nachgeschaltetem Empfangsverstärker übertragen. Dem Empfangsverstärker ist ein Steuerkreis mit diskontinuierlich variabler Dämpfung mit mehreren steuerbaren Dämpfungsgliedern nachgeschaltet. Zur Einstellung der Dämpfung wird dem Sendeverstärker über einen Schalter ein Kalibriersignal anstelle des sonst anliegendes Messignals zugeführt. Am Ausgang des Empfangsverstärkers wird vom Kalibriersignal ein Empfangspegel abgeleitet und zur Steuerung der Dämpfung verwendet. Durch wiederholte Kalibrierung können langsame Aenderungen der optischen Dämpfung kompensiert werden, allerdings jeweils mit beschränkter Auflösung, die durch die Grösse des kleinsten Schrittes des steuerbaren Dämpfungsgliedes bestimmt ist.

Weiterhin ist eine genanere Dämpfungskompensation mit stufenlosem Abgleich aus der EP-A-0 009 220 bekannt, Dort müssen jedoch Steuer- und Regelsignale Zusätzlich zum Nutzsignal über die optische Verbindung in beiden Richtungen übertragen werden, was einen hohen, Zusätzlichen Hardwareaufwand erfordert.

DARSTELLUNG DER ERFINDUNG

Die Erfindung, wie sie in den Patentansprüchen 1 und 5 definiert ist, löst die Aufgabe, ein Verfahren und eine Vorrichtung zur automatischen Dämpfungskompensation einer faseroptischen Messwertübertragung anzugeben, die einen genaueren Abgleich für Gleich- und Wechselspannungssignale ermöglicht.

Ein Vorteil der Erfindung besteht in einem verbesserten Abgleich. Dies wird dadurch erreicht, dass die bekannte, diskontinuierliche Steuerung durch eine kontinuierliche Regelung ersetzt ist. Dabei wird eine Temperaturdrift der Bauelemente des Regelkreises mit ausgeregelt, was bei einem Steuerkreis nicht der Fall ist.

Ein weiterer Vorteil besteht in der einfacheren und kostengünstigeren Schaltung im Vergleich zu der Steuerschaltung mit aufwendigeren Dämpfungsgliedern.

KURZE BESCHREIBUNG DER ZEICHNUNGEN

Die Erfindung wird nachstehend anhand von Ausführungsbeispielen erläutert. Es zeigen:

Fig. 1   eine Prinzipdarstellung einer automatischen Dämpfungskompensationseinrichtung mit einem Signalsender, einem Lichtleiter und einem Signalempfänger mit Regelkreis, der über einen Momentanwert-Speicher mit einem Verstärkungsfaktor-Stellorgan des Signalempfängers in Verbindung steht,

Fig. 2   einen Signalempfänger gemäss Fig. 1 mit einem Motor als Momentanwert-Speicher und einem Potentiometer als Verstärkungsfaktor-Stellorgan,

Fig. 3   einen Signalempfänger gemäss Fig. 1 mit einem Multiplikator als Verstärkungsfaktor-Stellorgan,

Fig. 4   einen Signalempfänger gemäss Fig. 1 mit einem elektrisch oder optisch steuerbaren Widerstand als Verstärkungsfaktor-Stellorgan und

Fig. 5   einen Signalempfänger gemäss Fig. 1 mit einem optoelektrischen Wandler als Verstärkungsfaktor-Stellorgan.

WEGE ZUR AUSFÜHRUNG DER ERFINDUNG

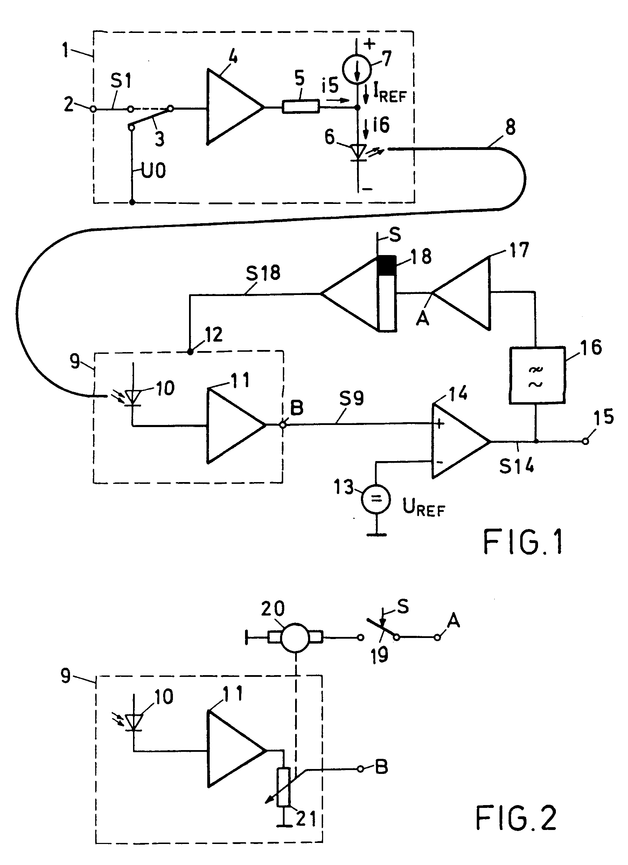

In Fig. 1 ist mit 1 ein optischer Signalsender mit einem Signaleingang 2 für ein Eingangs- bzw. Messwertsignal S1 bezeichnet, das von einem Signalgeber, der sich auf Hochspannungspotential oder in einer elektromagnetisch stark gestörten Umgebung befindet, kommt. Der Signalsender 1 ist gegenüber Erdpotential elektrisch isoliert. Das Messwertsignal S1 ist über einen elektronischen Schalter 3 einem Verstärker 4 mit vorgebbarer Verstärkung zugeführt. Ein Umschaltkontakt des Schalters 3 ist mit dem Gehäuse des Signalsenders 1 verbunden, das ein Bezugspotential U0 aufweist. Der Verstärker 4 ist über einen ohmschen Widerstand 5 mit einem elektrooptischen Wandler bzw. der Anode einer Sendediode 6 verbunden. Als Sendediode 6 wird vorzugsweise eine Lumineszenzdiode (LED) verwendet. Die Anode der Sendediode 6 ist mit einer Gleichstromquelle 7 verbunden, die an die Sendediode einen vorgebbaren Referenz-Gleichstrom $I_{REF}$ liefert. Der Referenz-Gleichstrom $I_{REF}$ und die Vorspannung für den Verstärker 4 wird von einer nicht dargestellten Batterie geliefert. Diesem Referenz-Gleichstrom $I_{REF}$ wird ein durch den Widerstand 5 fliessender Messstrom $i5$ zu einem Summen-bzw. Sendestrom $i6$ überlagert. Die Kathode der Sendediode 6 liegt auf einem Potential, das vorzugsweise so bemessen ist, dass die Anode der Sendediode 6, ohne Messignal, mindestens annähernd auf dem Bezugspotential U0 liegt. Der Messstrom $i5$ ist dann dem Eingangssignal des Sendeverstärkers 4 proportional.

Die Sendediode 6 ist über einen nicht dargestellten Koppler an eine faseroptische Uebertragungsleitung bzw. einen Lichtleiter 8 angekoppelt, der das von der Sendediode 6 abgestrahlte Licht über einen ebenfalls nicht dargestellten Koppler zu einem optoelektrischen Wandler bzw. einer Fotodiode 10 eines optischen Signalempfängers 9 übertägt, der das optische Signal in ein elektrisches umwandelt. Dieses elektrische Signal wird in einem der Fotodiode 10 nachgeschalteten Verstärker 11 des Signalempfängers 9 verstärkt. Der Signalempfänger 9 befindet sich auf Erdpotential.

Das an einem Ausgang B des Signalempfängers 9 anliegende Ausgangssignal S9 wird dem nichtinvertierenden Eingang eines Vergleichers bzw. Subtrahierers bzw. Differenzverstärkers 14 zugeführt, dessen invertierendem Eingang von einer Gleichspannungsquelle 11 eine Vergleichsspannung $U_{REF}$ zugeführt ist. Ein Ausgangssignal $S14 = k \cdot (S9 - U_{REF})$ ist einem Signalausgang 15 der automatischen Dämpfungskompensationseinrichtung zugeführt, an dem es zur weiteren Auswertung zur Verfügung steht. k bezeichnet eine Konstante bzw. einen Verstärkungsfaktor des Differenzverstärkers 14.

Das Differenzsignal S14 ist über ein Tiefpassfilter 16 einem 1. Nachverstärker 17 zugeführt, dessen Ausgang mit A bezeichnet ist. Das Ausgangssignal des 1. Nachverstärkers 17 ist über eine Abtast- und Halteschaltung (Sample and Hold) bzw. einen Momentanwert-Speicher 18 einem Einstelleingang 12 für den Verstärkungsfaktor des Signalempfängers 9 zugeführt. Ein Ausgangssignal S18 des an sich bekannten Momentanwert-Speichers 18 folgt im eingeschalteten Zustand, d.h. in Abhängigkeit von einem Steuersignal S, der Eingangsspannung des Momentanwert-Speichers 18. Im ausgeschalteten Zustand wird der Spannungswert im Ausschaltaugenblick gespeichert. Die Bauteile 9 - 18 bilden einen Regelkreis. Der 1. Nachverstärker 17 erfüllt dabei die Funktion eines Proportional-(P-), Proportional-Integral-(PI-) oder Integral-(I-) Reglers.

Durch die Kopplungsverluste in den beiden nicht dargestellten Lichtkopplern und die Dämpfung in dem Lichtleiter 8 wird das von Hochspannungspotential auf Erdpotential zu übertragene optische Signal gedämpft. Zur automatischen Kompensation dieser Dämpfung wird zunächst der Eingang des Verstärkers 4 mittels des Schalters 3 über eine Fernbedienung auf Bezugspotential U0 gelegt. Die Sendediode 6 führt in diesem Zustand nur den Referenz-Gleichstrom $I_{REF}$, der als Bezugswert für die Signalwerteinstellung auf der Empfangsseite dient.

Die Fernbedienung aller Funktionen erfolgt mittels einr zusätzlichen Lichtfaser und dazugehörigen, endseitigen Uebertragungseinrichtungen.

Auf der Empfangsseite wird der empfangene, dem Referenzstrom $I_{REF}$ proportionale Anteil des Lichtes mit einem Bezugswert, der Vergleichsspannung $U_{REF}$, verglichen und durch eine Regelschleife, die den Verstärkungsfaktor des Signalempfängers 9 steuert, automatisch abgeglichen. Nach erfolgtem Abgleich, d.h., wenn das Differenzsignal S14 wenigstens annähernd den Wert Null aufweist, wird die Regelschleife abgeschaltet, wobei der vom Momentanwert-Speicher 18 gesteuerte Verstärkungsfaktor auf den durch die Wirkung der Regelschleife abgeglichenen Wert eingestellt bleibt.

Der erfolgte Abgleich wird mittels eines nicht dargestellten Fensterkomparators detektiert, der an den Ausgang des Vergleichers 14 angeschlossen ist. Mit einem Fensterkomparator kann man feststellen, ob dessen Eingangsspannung im Bereich zwischen 2 Vergleichsspannungen oder ausserhalb liegt. Ein derartiger Fensterkomparator ist z.B. aus dem Buch: U. Tietze/Ch. Schenk, Halbleiter-Schaltungstechnik, 5. Auflage, Spinger-Verlag Berlin, Heidelberg, New York 1980, S. 413 bekannt. Schaltungen für Momentanwert-Speicher 18 sind dort auf den S. 407 - 410 dargestellt und beschrieben.

Nach dem Abgleich ist das Uebertragungssystem sowohl für Wechsel- als auch für Gleichspannungs-Messignale kalibriert, denn jede Aenderung des Gleichspannungsanteiles im empfangenen Licht wird nun als Gleichspannungssignal und nicht als Aenderung des Uebertragungsfaktors interpretiert. In Abhängigkeit vom Erreichen des Abgleichs erhält der Momentanwert-Speicher 18 über sein Steuersignal S die Information "speichern", und der Schalter 3 wird in die gestrichelt dargestellte Position gebracht, wodurch das Messwertsignal S1 dem Eingang des Verstärkers 4 zugeführt wird.

Um Langzeiteffekte, wie Erwärmung der Sendediode 6, eine zeitliche unstabile Dämpfung der faseroptischen Uebertragungsstrecke usw. zu eliminieren, ist es empfehlenswert, vor jeder Messung diesen automatischen Abgleich durchzuführen. Diese Einschränkung ist in der Praxis unbedeutend, da in der Regel wegen der begrenzten Kapazität der Batterie zur Speisung von Bauelementen auf der Sendeseite nur kurzzeitige Messungen durchgeführt werden.

Die Figuren 2 - 5 zeigen verschiedene Ausführungsbeispiele des optischen Signalempfängers 9 mit einem durch ein elektrisches Signal S18 einstellbaren Verstärkungsfaktor. Gleiche Bezugszeichen kennzeichnen gleiche Gegenstände wie bei Fig. 1.

In Fig. 2 wird der Momentanwert-Speicher 18 durch einen Motor 20 gebildet. Der Motor 20 regelt mittels eines Potentiometers 21 den Verstärkungsfaktor des Signalempfängers 9. Der Motor 20 ist über einen elektronischen Schalter 19 an den Ausgang A des 1. Nachverstärkers 17 angeschlossen. Der Schalter 19 wird in Abhängigkeit vom Steuersignal S geöffnet, wenn der Abgleich erreicht ist.

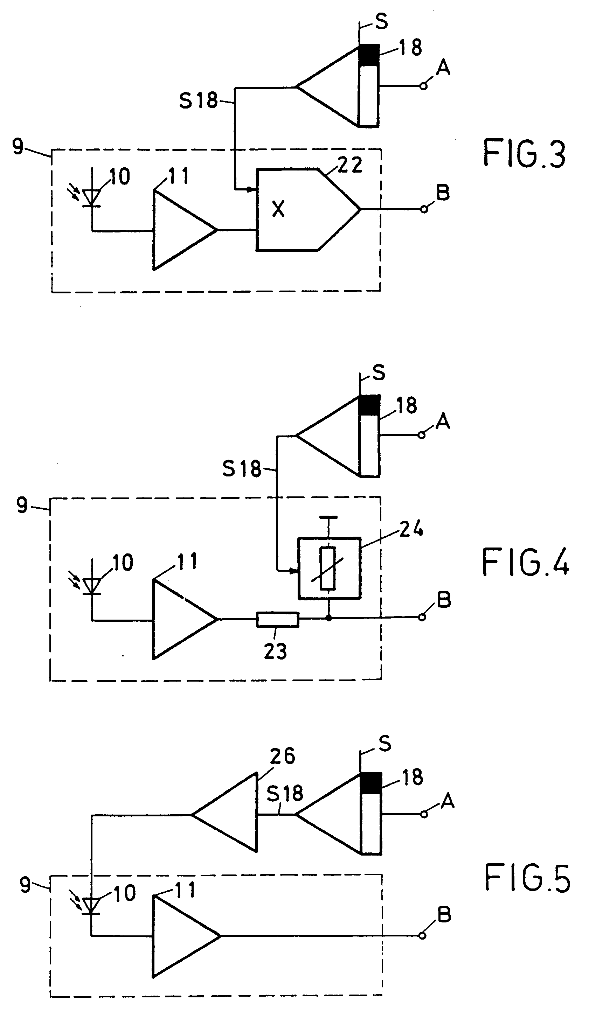

Bei dem Ausführungsbeispiel gemäss Fig. 3 ist der Ausgang des Empfangsverstärkers 11 des Signalempfängers 9 mit einem 1. Multiplikator-Eingang eines Multiplikators 22 verbunden. Ein 2. Multiplikatoreingang des Multiplikators 22 steht mit dem Ausgang des Momentanwert-Speichers 18 in Verbindung.

Anstelle eines analogen Momentanwert-Speichers 18 kann selbstverständlich ein driftfreier, digitaler Speicher verwendet werden, dem ein nicht dargestellter Digital-Analog-Wandler nachgeschaltet ist.

Bei dem Ausführungsbeispiel gemäss Fig. 4 ist der Ausgang des Empfangssignalverstärkers 11 des Signalempfängers 9 an einen Spannungsteiler aus einem Widerstand 23 und einem durch ein elektrisches oder optisches Signal steuerbaren Widerstand 24 angeschlossen. Der elektrische Verbindungspunkt der beiden Widerstände 23 und 24 ist mit dem Ausgang B des Signalempfängers 9 verbunden. Der Widerstand 24 ist in Abhängigkeit vom Ausgangssignal S18 des Momentanwert-Speichers 18 steuerbar, entweder elektrisch vorzugsweise über einen nicht dargestellten Sperrschicht-Feldeffekttransistor oder optisch über einen nicht dargestellten Fotowiderstand, wobei die Lichtstärke in Abhängigkeit von der Amplitude des Ausgangssignals S18 gesteuert ist.

Bei dem Ausführungsbeispiel gemäss Fig. 5 wird der Verstärkungsfaktor des Signalempfängers 9 durch Einstellung der Vorspannung einer Avalanche-Fotodiode 10 durchgeführt, wobei deren Anode über einen 2. Nachverstärker 25 mit dem Ausgang des Momentanwert-Speichers 18 verbunden ist.

GEWERBLICHE VERWERTBARKEIT

Das beschriebene Verfahren zur automatischen Dämpfungskompensation eignet sich vor allem für Messungen in elektromagnetisch stark gestörter Umgebung, wie Hochspannungslabors und bei Simulatoren für nukleare elektromagnetische Impulse (NEMP-Simulatoren), für Messungen von Signalen, die einen hohen Anteil eines Gleichtaktsignals aufweisen, z.B. Messungen an Thyristorschaltungen, sowie für Messungen der Abschirmwirkung von Gerätegehäusen.

**Patentansprüche**

1.  Verfahren zur automatischen Dämpfungskompensation einer faseroptischen Messwertübertragung
    a) mit einem Signalsender (1), der mindestens einen elektrooptischen Wandler (6) zur Umwandlung elektrischer Signale in optische aufweist,
    b) mit einem Signalempfänger (9), der mindestens einen optoelektrischen Wandler (10) zur Umwandlung optischer Signale in elektrische aufweist,
    c) wobei der elektrooptische Wandler (6) über mindestens einen Lichtleiter (8) mit dem optoelektrischen Wandler (10) in Wirkverbindung steht,
    d) wobei ein dem Signalsender (1) eingangsseitig zugeführtes elektrisches Messwertsignal (S1) über einen Schalter (3) dem elektrooptischen Wandler (6) zugeführt, jedoch während einer vorgebbaren Abschaltzeitdauer von der Uebertragung zum elektrooptischen Wandler (6) abgeschaltet wird,
    e) wobei ein während dieser Abschaltzeitdauer auftretendes elektrisches Ausgangssignal (S9) des Signalempfängers (9) mit einem Referenzsignal ($U_{REF}$) verglichen wird,
    dadurch gekennzeichnet,
    f) dass in Abhängigkeit von einem aus diesem Vergleich hervorgehenden Differenzsignal (S14) ein Verstärkungsfaktor des Signalempfängers (9) so geregelt wird, dass dieses Differenzsignal wenigstens annähernd Null wird.

2.  Verfahren nach Anspruch 1, dadurch gekennzeichnet,
    a) dass das Differenzsignal (S14) einer Tiefpassfilterung (16) unterzogen und
    b) nach einer anschliessenden Nachverstärkung (17) als den Verstärkungsfaktor des Signalempfängers (9) bestimmendes Signal (S18) gespeichert wird.

3. Verfahren nach Anspruch 1 oder 2, dadurch gekennzeichnet,

a) dass die Regelung des Verstärkungsfaktors nach Ablauf der Abschaltzeitdauer unterbrochen wird und

b) dass der Verstärkungsfaktor nach Ablauf der Abschaltzeitdauer bis zu einer wiederholten Abschaltung des Messwertsignals auf den durch die Wirkung der Regelung abgeglichenen Wert eingestellt bleibt.

4. Verfahren nach einem der Ansprüche 1 bis 3, dadurch gekennzeichnet, dass der elektrooptische Wandler (6) während der Abschaltzeitdauer eingangsseitig mit einem Bezugspotential (U0) in Wirkverbindung steht.

5. Automatische Dämpfungs-Kompensationseinrichtung für eine Signalübertragung mit einem Lichtleiter (8)

a) mit einem Signalsender (1), der mindestens einen elektrooptischen Wandler (6) zur Umwandlung elektrischer Signale in optische aufweist und der eingangsseitig einen Signaleingang (2) für ein zu übertragendes elektrisches Messwertsignal (S1) besitzt,

b) mit einem Signalempfänger (9), der mindestens einen optoelektrischen Wandler (10) zur Umwandlung optischer Signale in elektrische aufweist und der ausgangsseitig einen Signalausgang (B) für ein Ausgangssignal (S9) besitzt,

c) wobei der elektrooptische Wandler (6) über mindestens einen Lichtleiter (8) mit dem optoelektrischen Wandler (10) in Wirkverbindung steht,

d) mit einem Verstärker (4), der eingangsseitig über einen Schalter (3) mit dem Signaleingang (2) für das Messwertsignal (S1) und ausgangsseitig mit dem elektrooptischen Wandler (6) in Wirkverbindung steht,

e) mit einem Vergleicher (14), der eingangsseitig einerseits mit dem Ausgang (B) des Signalempfängers (9) und andererseits mit einer Vergleichsspannung (U$_{REF}$) in Wirkverbindung steht und an dem ausgangsseitig das Ausgangssignal (S14) der Dämpfungskompensationseinrichtung abgreifbar ist, dadurch gekennzeichnet,

f) dass der Signalempfänger (9) ein Verstärkungsfaktor-Stellorgan aufweist und

g) dass der Vergleicher (14) ausgangsseitig über einen Momentanwert-Speicher (18) mit diesem Verstärkungsfaktor-Stellorgan in Wirkverbindung steht.

6. Automatische Dämpfungs-Kompensationseinrichtung nach Anspruch 5, dadurch gekennzeichnet,

a) dass der Vergleicher (14) ausgangsseitig über ein Tiefpassfilter (16) und

b) über einen diesem nachgeschalteten 1. Nachverstärker (17) mit dem Momentanwert-Speicher (18) in Wirkverbindung steht.

7. Automatische Dämpfungs-Kompensationseinrichtung nach Anspruch 5 oder 6, dadurch gekennzeichnet,

a) dass das Verstärkungsfaktor-Stellorgan des Signalempfängers (9) ein Potentiometer (21) ist, das eingangsseitig mit dem optoelektrichen Wandler (10) und ausgangsseitig mit einem nichtinvertierenden Eingang des Vergleichers (14) in Wirkverbindung steht,

b) dass der Momentanwertspeicher ein Motor (20) ist und

c) dass der Motor mit dem Potentiometer in Steuerverbindung steht.

8. Automatische Dämpfungs-Kompensationseinrichtung nach Anspruch 5 oder 6, dadurch gekennzeichnet,

a) dass das Verstärkungsfaktor-Stellorgan des Signalempfängers (9) ein Multiplikator (22) ist,

b) der eingangsseitig einerseits mit dem optoelektrischen Wandler (10) und

c) andererseits mit dem Ausgang des Momentanwert-Speichers (18) in Wirkverbindung steht und d) der ausgangsseitig mit einem bzw. dem nichtinvertierenden Eingang des Vergleichers (14) in Wirkverbindung steht.

9. Automatische Dämpfungs-Kompensationseinrichtung nach Anspruch 5 oder 6, dadurch gekennzeichnet,

a) dass das Verstärkungsfaktor-Stellorgan des Signalempfängers (9) ein elektrisch oder optisch steuerbarer Widerstand (24) ist, der mit dem Ausgang (B) des Signalempfängers (9) in Wirkverbindung steht, und

b) der in Abhängigkeit vom Ausgangssignal (S18) des Momentanwert-Speichers (18) gesteuert ist.

10. Automatische Dämpfungs-Kompensationseinrichtung nach Anspruch 5 oder 6, dadurch gekennzeichnet,

a) dass das Verstärkungsfaktor-Stellorgan des Signalempfängers (9) der optoelektrische Wandler (10) ist,

b) dessen Verstärkungsfaktor mittels seiner Vorspannung in Abhängigkeit vom Ausgangssignal (S18) des Momentanwert-Speichers (18) gesteuert ist.

## Claims

1. Method for automatic compensation of the attenuation of a fibre optical measurement value transmission

   a) with a signal transmitter (1) which exhibits at least one electrooptical transducer (6) for converting electrical signals into optical signals,

   b) with a signal receiver (9) which exhibits at least one optoelectrical transducer (10) for converting optical signals into electrical signals,

   c) the electrooptical transducer (6) being effectively connected via at least one optical waveguide (8) to the optoelectrical transducer (10),

   d) an electrical measurement value signal (S1), which is supplied to the input of the signal transmitter (1), being supplied to the input of the signal transmitter (1), being supplied via a switch (3) to the electrooptical transducer (6) but being disconnected from the transmission to the electrooptical transducer (6) during a predeterminable period of disconnection,

   e) an electrical output signal (S9) of the signal receiver (9) occurring during this disconnection period being compared with a reference signal ($U_{REF}$), characterised in that

   f) a gain factor of the signal receiver (9) is controlled in dependence on a difference signal (S14) produced by this comparison in such a manner that this difference signal becomes at least approximately zero.

2. Method according to Claim 1, characterised in that

   a) the difference signal (S14) is subjected to lowpass filtering (16) and

   b) after a subsequent post amplification (17), is stored as signal (S18) which determines the gain factor of the signal receiver (9).

3. Method according to Claim 1 or 2, characterised in that

   a) the controlling of the gain factor is interrupted after the disconnection period has elapsed and

   b) the gain factor remains set to the value calibrated by the action of the control system after the disconnection period has elapsed until the measurement value signal is again disconnected.

4. Method according to one of Claims 1 to 3, characterised in that the input of the electrooptical transducer (6) is effectively connected to a reference potential (UO) during the disconnection period.

5. Automatic attenuation compensation device for a signal transmission system with an optical waveguide (8)

   a) with a signal transmitter (1) which exhibits at least one electrooptical transducer (6) for converting electrical signals into optical signals and which has at its input a signal input (2) for an electrical measurement value signal (S1) to be transmitted,

   b) with a signal receiver (9) which exhibits at least one optoelectrical transducer (10) for converting optical signals into electrical signals and which has at its output a signal output (B) for an output signal (S9),

   c) the electrooptical transducer (6) being effectively connected to the optoelectrical transducer (10) via at least one optical waveguide (8),

   d) with an amplifier (4), the input of which is effectively connected via a switch (3) to the signal input (2) for the measurement value signal(S1) and the output of which is effectively connected to the electrooptical transducer (6),

   e) with a comparator (14), the input of which is effectively connected on the one hand, to the output (B) of the signal receiver (9) and, on the other hand, to a reference voltage ($U_{REF}$) and at the output of which the output signal (S14) of the attenuation compensation device can be picked up, characterised in that

   f) the signal receiver (9) exhibits a gain factor adjusting element and

   g) the output of the comparator (14) is effectively connected to this gain factor adjusting element via an instantaneous-value memory (18).

6. Automatic attenuation compensation device according to Claim 5, characterised in that

   a) the output of the comparator (14) is effectively connected via a lowpass filter (16) and

   b) via a 1st post amplifier (17), following the filter, to the instantaneous-value memory (18).

7. Automatic attenuation compensation device according to Claim 5 or 6, characterised in that

   a) the gain factor adjusting element of the signal receiver (9) is a potentiometer (21), the input of which is effectively connected to the optoelectrical transducer (10) and the output of which is effectively connected to a non-inverting input of the comparator (14),

b) the instantaneous-value memory is a motor (20) and

c) the motor is controllingly connected to the potentiometer.

8. Automatic attenuation compensation device according to Claim 5 or 6, characterised in that

a) the gain factor adjusting element of the signal receiver (9) is a multiplier (22),

b) the input of which is effectively connected, on the one hand, to the optoelectrical transducer (10) and

c) on the other hand, to the output of the instantaneous-value memory (18), and

d) the output of which is effectively connected to a or the non-inverting input of the comparator (14).

9. Automatic attenuation compensation device according to Claim 5 or 6, characterised in that

a) the gain factor adjusting element of the signal receiver (9) is an electrically or optically controllable resistance (24) which is effectively connected to the output (B) of the signal receiver (9), and

b) which is controlled as a function of the output signal (S18) of the instantaneous-value memory (18).

10. Automatic attenuation compensation device according to Claim 5 or 6, characterised in that

a) the gain factor adjusting element of the signal receiver (9) is the optoelectrical transducer (10),

b) the gain factor of which is controlled by means of its bias voltage as a function of the output signal (S18) of the instantaneous-value memory (18).

**Revendications**

1. Procédé de compensation automatique de l'atténuation d'une transmission de valeurs de mesure par fibres optiques, comprenant :

a) un émetteur de signaux (1), qui comporte au moins un convertisseur électro-optique (6) pour convertir des signaux électriques en signaux optiques,

b) un récepteur de signaux (9), qui comporte au moins un convertisseur optoélectrique (10) pour convertir des signaux optiques en signaux électriques,

c) le convertisseur électro-optique (6) étant en liaison active avec le convertisseur optoélectrique (10) via au moins un guide de lumière (8),

d) un signal de valeur de mesure électrique (S1) envoyé du côté entrée à l'émetteur de signaux (1) étant acheminé via un commutateur (3) au convertisseur électro-optique (6), mais étant coupé au cours d'une période de déconnexion prédéterminable de la transmission au convertisseur électro-optique (6),

e) un signal de sortie électrique (S9) du récepteur de signaux (9) qui apparaît au cours de cette période de déconnexion étant comparé à un signal de référence (U$_{REF}$),

caractérisé en ce que :

f) en fonction d'un signal de différence (S14) découlant de cette comparaison, un facteur d'amplification du récepteur de signaux (9) est réglé de telle sorte que ce signal de différence soit au moins approximativement égal à zéro.

2. Procédé selon la revendication 1, caractérisé en ce que :

a) le signal de différence (S14) est soumis à un filtrage passe-bas (16) et,

b) après une postamplification (17) ultérieure, il est stocké comme signal (S18) déterminant le facteur d'amplification du récepteur de signaux (9).

3. Procédé selon la revendication 1 ou 2, caractérisé en ce que :

a) la régulation du facteur d'amplification est interrompue au terme de la période de déconnexion et,

b) le facteur d'amplification, au terme de la période de déconnexion et jusqu'à une nouvelle coupure du signal de valeur de mesure, reste réglé à la valeur égalisée par l'action de la régulation.

4. Procédé selon l'une quelconque des revendications 1 à 3, caractérisé en ce que le convertisseur électro-optique (6) est en liaison active, du côté entrée, avec un potentiel de référence (UO) au cours de la période de déconnexion.

5. Dispositif de compensation automatique d'atténuation pour une transmission de signaux avec un guide de lumière (8) comprenant :

a) un émetteur de signaux (1) qui comporte au moins un convertisseur électro-optique (6) pour convertir des signaux électriques en signaux optiques et possède, du côté entrée, une entrée de signaux (2) pour un signal de valeur de mesure électrique (S1) à transmettre,

b) un récepteur de signaux (9) qui comporte au moins un convertisseur optoélectrique (10) pour convertir des signaux optiques en signaux électriques et possède, du côté sortie, une sortie de signaux (B) pour un signal de sortie (S9),

c) le convertisseur électro-optique (6) étant en liaison active, via au moins un guide de lumière (8), avec le convertisseur optoélectrique (10),

d) un amplificateur (4), qui est en liaison active, du côté entrée, via un commutateur (3) avec l'entrée de signaux (2) pour le signal de valeur de mesure (S1) et, du côté sortie, avec le convertisseur électro-optique (6),

e) un comparateur (14) qui est en liaison active, du côté entrée, d'une part avec la sortie (B) du récepteur de signaux (9) et, d'autre part, avec une tension de comparaison ($U_{REF}$) et sur lequel, du côté sortie, le signal de sortie (S14) du dispositif de compensation d'atténuation peut être prélevé,

caractérisé en ce que :

f) le récepteur de signaux (9) comporte un organe de réglage du facteur d'amplification, et

g) l'amplificateur (14) est en liaison active, du côté sortie, avec cet organe de réglage du facteur d'amplification via une unité de stockage des valeurs instantanées (18).

6. Dispositif de compensation automatique d'atténuation selon la revendication 5, caractérisé en ce que :

a) le comparateur (14) est en liaison active, du côté sortie, via un filtre passe-bas (16), et

b) via un premier postamplificateur (17) connecté en aval, avec l'unité de stockage des valeurs instantanées (18).

7. Dispositif de compensation automatique d'atténuation selon la revendication 5 ou 6, caractérisé en ce que :

a) l'organe de réglage du facteur d'amplification du récepteur de signaux (9) est un potentiomètre (21) qui est en liaison active, du côté entrée, avec le convertisseur optoélectrique (10) et, du côté sortie, avec une entrée non inverseuse du comparateur (14),

b) l'unité de stockage des valeurs instantanées est un moteur (20), et

c) le moteur est en liaison de commande avec le potentiomètre.

8. Dispositif de compensation automatique d'atténuation selon la revendication 5 ou 6, caractérisé en ce que :

a) l'organe de réglage du facteur d'amplification du récepteur de signaux (9) est un multiplicateur (22) qui

b) est en liaison active, du côté entrée, d'une part, avec le convertisseur optoélectrique (10), et

c) d'autre part, avec la sortie de l'unité de stockage des valeurs instantanées (18), et

d) est en liaison active, du côté sortie, avec une entrée ou l'entrée non inverseuse du comparateur (14).

9. Dispositif de compensation automatique d'atténuation selon la revendication 5 ou 6, caractérisé en ce que :

a) l'organe de réglage du facteur d'amplification du récepteur de signaux (9) est une résistance (24) pouvant être commandée par voie électrique ou optique, qui est en liaison active avec la sortie (B) du récepteur de signaux (9), et

b) qui est commandée en fonction du signal de sortie (S18) de l'unité de stockage des valeurs instantanées (18).

10. Dispositif de compensation automatique d'atténuation selon la revendication 5 ou 6, caractérisé en ce que :

a) l'organe de réglage du facteur d'amplification du récepteur de signaux (9) est le convertisseur optoélectrique (10),

b) dont le facteur d'amplification est commandé par sa tension de polarisation en fonction du signal de sortie (S18) de l'unité de stockage des valeurs instantanées (18).

FIG.1

FIG.2

FIG.3

FIG.4

FIG.5